# EUROPEAN PATENT SPECIFICATION

(11) **EP 2 080 546 B1**
(45) Date of publication and mention of the grant of the patent: **19.03.2014**
(21) Application number: 09150615.4
(22) Date of filing: 15.01.2009
(51) Int. Cl.: B01D 46/02, B01D 46/00

(54) **Frame for fabric filters**
Rahmen für Gewebefilter
Cadre pour filtres en tissu

(30) Priority: 18.01.2008 US 16429
(43) Date of publication of application: 22.07.2009
(73) Proprietor: SmartPool LLC, Lakewood NJ 08701 (US)
(72) Inventor: Hui, Wing Kin, Kwun Tong Hong Kong (CN)
(74) Representative: Chaillot, Geneviève

(56) References cited:
- US-A- 4 988 437
- US-A1- 2004 163 370
- US-A1- 2005 126 136
- US-A1- 2005 178 268

## Description

### Field of the Invention

This invention generally relates to the field of fabric filters. More particularly, this invention relates to a structure for enabling a fabric filter to be easily and effectively used by a consumer on a variety of different appliances where the fabric filter includes a rigid frame.

### Background of the Invention

Fabric filters are useful in many different situations. For example, pool cleaners use a fabric filter. Different pool cleaners have different sized and shaped fabric filters. Periodically, the fabric filter needs to be changed or replaced. Typically, the user needs to order an entire new unit including the filter bag. Indeed some manufacturers only make a filter cartridge and each time the filter needs to be replaced an entirely new cartridge must be used.

Additionally, fabric filter are used in industrial cleaning situations. For example, in clean room settings, cleaners with fabric filters are used almost exclusively.

In order to make it simple and economical for consumers to replace their filters, a substitute filter structure is needed wherein the filter bag can be easily and efficiently replaced. Additionally, such a structure should be easily adapted to wide variety of appliances which use fabric filter bags regardless of the irregularity or uniformity of each such shape required by the particular appliance.

### Summary of the Invention

The structure in accordance with the invention is a rigid universal frame, which can be adapted and contoured for use with a variety of different appliance housings. The structure of the invention further includes a housing and a fabric filter, such as a filter bag. The frame in combination with the housing provides a clamping structure which secures the filter there between.

It is an object of this invention to provide a rigid filter frame for a fabric filter which is adaptable to be contoured for a variety of different appliances.

It is an additional object of this invention to provide such a filter frame which is easy to change and easy to replace.

In accordance with one exemplary embodiment of this invention, is disclosed a filter structure according to claim 1.

In an exemplary embodiment of the fabric filter in accordance with the instant invention, the fabric filter is passed through the central opening and wrapped around the inside of the frame. The filter passes over the female clamping member and the excess filter portion hangs outside the circumference of the frame annulus. The frame including the filter is passed over the male clamping member and secured thereto by means of a force fit between the members.

In various other embodiments, the housing may define regular or irregular shapes and forms. In all cases the frame is sized and shaped to be adapted to be secured to the housing with the fabric filter in place.

Preferably, the frame annulus includes a raceway defining a female clamping member and the housing including a compatible male clamping member for being force fit into the raceway with the fabric filter between the members.

Preferably, the frame defines a picture frame type central opening.

Preferably, the fabric filter is wrapped around the frame annulus and the annulus is force fit over the housing for removeably securing the housing and frame together with the fabric filter there between.

Preferably, the fabric filter is wrapped around the inside of the annulus.

Preferably, the housing is a regular shape defining a rectangle.

Preferably, the housing is a regular shape defining a square.

Preferably, the housing is a generally uniform shape approximating a circle.

Preferably, the housing is a irregular angular shape.

Preferably, the housing is a irregular curved shape.

It is an advantage of this invention to provide such a fabric filter frame which is adaptable to a wide variety of different appliances and which is easy to replace the fabric filter.

### Brief Description of the Drawing

For a further understanding of the objects and advantages of the present invention, reference should be had to the following detailed description, taken in conjunction with the accompanying drawing, in which like parts are given like reference numerals and wherein:
Fig. 1 is a perspective view of the frame filter in accordance with this invention.
Figs. 2 & 3 are sectional views illustrating the connection of the fabric filter and the frame and housing of the frame filter in accordance with this invention.
Figs. 4 -6 illustrate various embodiments of the frame filter in accordance with this invention.

### Detailed Description of the Invention

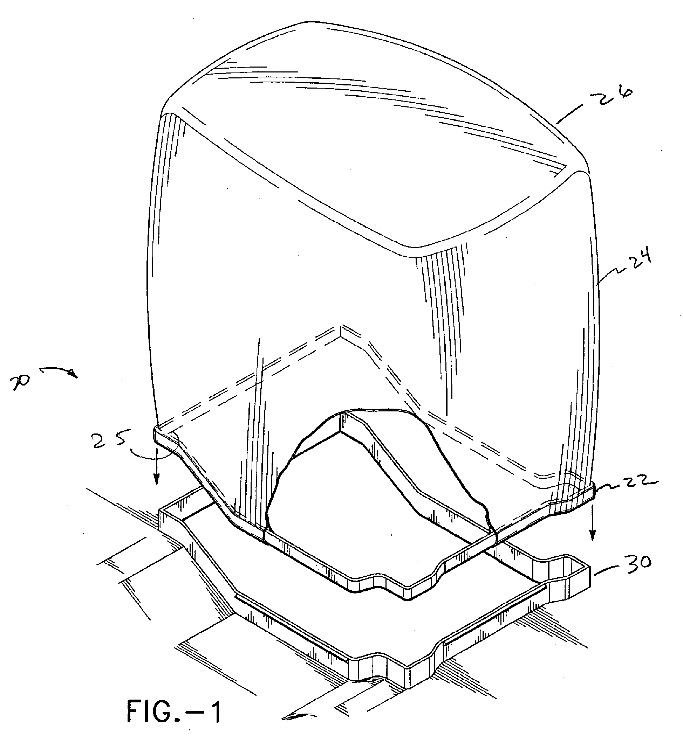

An exemplary embodiment of the filter structure 20 in accordance with the present invention generally denoted by the numeral 20 will now be described with reference to Fig. 1. The filter structure 20 in accordance with the instant invention includes a universal frame 22 and a fabric filter bag 24. The frame 22 and bag 24 are connected to a housing 30 for securing the bag thereto.

As seen in Figs. 1 - 3, the fabric filter 24 has an open end 25 and a closed end 26. The open end 25 is wrapped around the frame 22. The frame 22 is rigid and withstand considerable pressure. In the exemplary embodiment shown in Figs. 1 - 3, the fabric filter open end 25 is wrapped around the inside of frame 22. The excess portion of the fabric filter bag 24 curls over the frame 22.

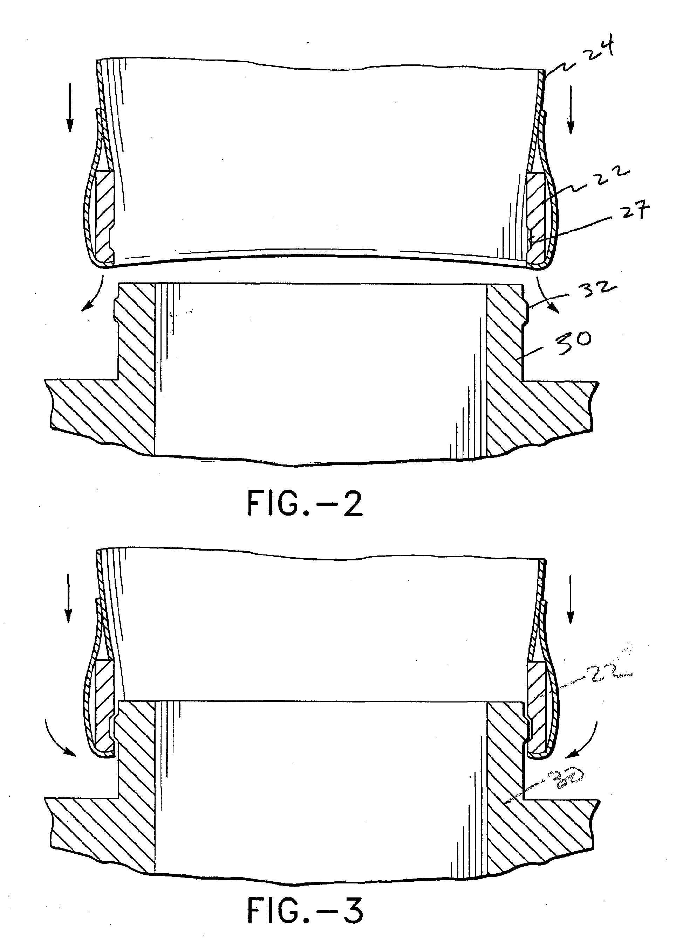

As seen most clearly in Figs. 2 & 3, the inside portion of the frame 22 has a female member comprising part of the means for securing the frame 22 to a housing 30 designated by the numeral 27. The housing 30 has a male member 32 which provides a compatible force fit with the female member 27. Once the fabric filter 24 is wrapped around the frame 22, it is secured thereto by force fitting the frame 22 over the housing 30.

As will be appreciated, the combination of the male and female members, 27 and 32, respectively, define a clamping member. The clamping member is designed to withstand considerable movement and even shaking without losing its secure hold of the filter bag 24. This allows the frame filter 20 of the instant invention to be adaptable for a variety of situations. It even allows the frame filter 20 to be used under quite adverse and difficult conditions where keeping the filter bag 26 secured to the housing 30 is an issue.

In an exemplary embodiment, the inside portion of the frame 22 defines an annulus. The frame annulus has a recessed area, which defines a raceway around the circumference of the frame 22. In the same exemplary embodiment, the housing 30 includes male members which compatibly fit within the raceway and secure the frame 22 to the housing 30. Clearly, when the filter bag 24 is wrapped around the housing 24 using the same technique earlier described, the filter bag 24 is secured to the housing 30 and the advantages described above apply equally to this embodiment as well.

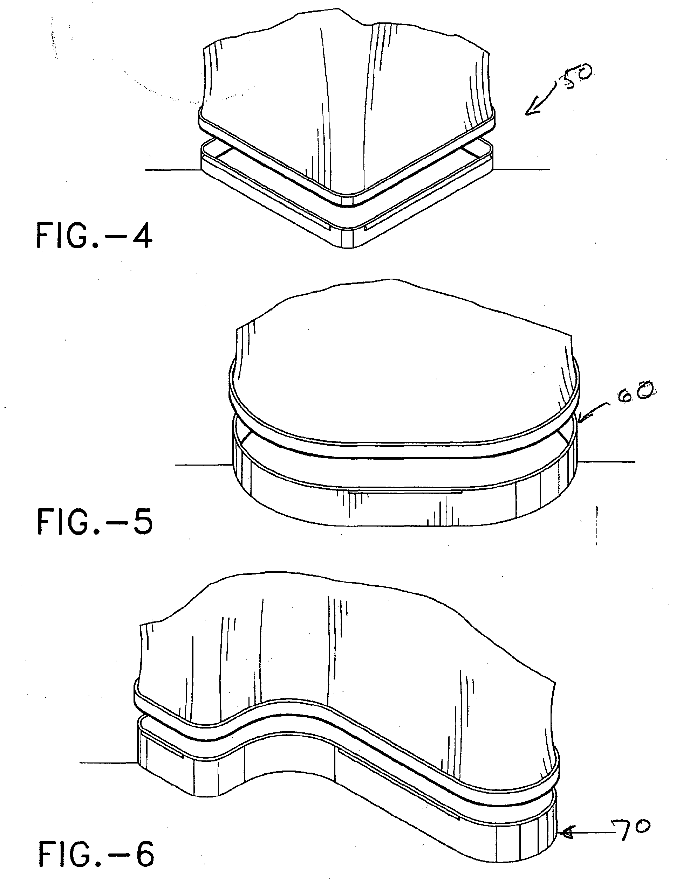

Figs. 4- 6 illustrate the ability of the frame filter in accordance with this invention to be adapted to various configurations of housings and frames. This allows the frame filter to be used a wide variety of appliances within the spirit and scope of the invention. With particular reference to Fig. 4, there is shown another exemplary embodiment of the frame filter in accordance with the invention, generally denoted by the numeral 50. In this embodiment, the frame filter comprises a generally square and uniform shape. In all other respects, the elements and members of the frame filter are the same as the embodiments discussed above.

With particular reference to Fig. 5, there is shown another exemplary embodiment of the frame filter in accordance with the invention, generally denoted by the numeral 60. In this embodiment, the frame filter comprises a generally round and uniform shape. In all other respects, the elements and members of the frame filter are the same as the embodiments discussed above.

With particular reference to Fig. 6, there is shown another exemplary embodiment of the frame filter in accordance with the invention, generally denoted by the numeral 70. In this embodiment, the frame filter comprises a generally irregular curved shape. In all other respects, the elements and members of the frame filter are the same as the embodiments discussed above.

While the foregoing detailed description has described several embodiments of the fabric filter frame in accordance with this invention, it is to be understood that the above description is illustrative only and not limiting of the disclosed invention.

## Claims

1. A filter structure (20) for use with a fabric filter (24) and adaptable to an appliance, the filter structure (20) comprising:
a frame member (22), the frame member (22) being rigid, wherein the inside portion of the frame 22 defines an annulus;
a housing member (30);
a fabric filter (24) held securely between the frame (22) and the housing (30);
the frame member (22) and the housing (30) including compatible clamping means for securely holding the frame (22) and housing (30) together;
the clamping means removeably securing the housing (30) and frame (22) members together with the fabric filter (24) held between the members;
**characterised in that**
the frame annulus is force fit over the housing, wherein the clamping means includes a female clamping member (27) on the frame (22) and a male clamping member (32) on the housing (30), wherein the female clamping member (27) is force fit over the male clamping member with the fabric filter (24) between the members (27, 32) and wherein the female clamping member (27) is defined by a raceway provided in the frame annulus, the male member (32) being force fit into the raceway with the fabric filter (24) between the members (27, 32).

2. The filter structure (20) of Claim 1, wherein the fabric filter (24) is wrapped around the frame annulus.

3. The filter structure (20) of Claim 3, wherein the fabric filter (24) is wrapped around the inside of the frame annulus.

4. The filter structure (20) of Claim 1, wherein the housing (30) has the shape of a rectangle.

5. The filter structure (50) of Claim 1, wherein the housing (30) has the shape of a square.

6. The filter structure (60) of Claim 1, wherein the housing (30) has the shape of a circle.

7. The filter structure (20) of Claim 1, wherein the housing (30) is an angular shape.

8. The filter structure (70) of Claim 1, wherein the housing (30) is a curved shape.

## Patentansprüche

1. Filterstruktur (20) zur Verwendung mit einem Gewebefilter (24) und anpassbar an eine Vorrichtung, wobei die Filterstruktur (20) Folgendes umfasst:
ein Rahmenelement (22), wobei das Rahmenelement (22) starr ist, wobei der innere Abschnitt des Rahmens (22) einen Ring definiert;
ein Gehäuseelement (30);
einen Gewebefilter (24), der sicher zwischen dem Rahmen (22) und dem Gehäuse (30) gehalten ist;
wobei das Rahmenelement (22) und das Gehäuse (30) aufeinander abgestimmte Klemmmittel zum sicheren Zusammenhalten des Rahmens (22) und Gehäuses (30) aufweisen;
wobei die Klemmmittel das Gehäuse (30) und das Rahmenelement (22) lösbar aneinander sichern, wobei der Gewebefilter (24) zwischen den Elementen gehalten ist;
**dadurch gekennzeichnet, dass**
der Rahmenring über das Gehäuse gepresst ist, wobei das Klemmmittel ein inneres Klemmelement (27) an dem Rahmen (22) und ein äußeres Klemmelement (32) an dem Gehäuse (30) aufweist, wobei das innere Klemmelement (27) über das äußere Klemmelement gepresst ist, mit dem Gewebefilter (24) zwischen den Elementen (27, 32), und wobei das innere Klemmelement (27) durch eine Bahnrille definiert ist, die in dem Rahmenring angeordnet ist, wobei das äußere Element (32) in die Bahnrille gepresst ist, mit dem Gewebefilter (24) zwischen den Elementen (27, 32).

2. Filterstruktur (20) nach Anspruch 1, wobei der Gewebefilter (24) um den Rahmenring gewickelt ist.

3. Filterstruktur (20) nach Anspruch 1, wobei der Gewebefilter (24) um das Innere des Rahmenrings gewickelt ist.

4. Filterstruktur (20) nach Anspruch 1, wobei das Gehäuse (30) die Form eines Rechtecks aufweist.

5. Filterstruktur (50) nach Anspruch 1, wobei das Gehäuse (30) die Form eines Quadrats aufweist.

6. Filterstruktur (60) nach Anspruch 1, wobei das Gehäuse (30) die Form eines Kreises aufweist.

7. Filterstruktur (20) nach Anspruch 1, wobei das Gehäuse (30) eine Winkelform aufweist.

8. Filterstruktur (70) nach Anspruch 1, wobei das Gehäuse (30) eine gebogene Form aufweist.

## Revendications

1. Structure filtrante (20) destinée à être utilisée avec un tissu filtrant (24) et adaptable à un appareil, la structure filtrante (20) comprenant :
un élément cadre (22), l'élément cadre (22) étant rigide, la partie intérieure du cadre (22) définissant un anneau ;
un élément boîtier (30) ;
un tissu filtrant (24) maintenu fermement entre le cadre (22) et le boîtier (30) ;
l'élément cadre (22) et le boîtier (30) comprenant des moyens de serrage compatibles pour fixer fermement ensemble le cadre (22) et le boîtier (30) ;
les moyens de serrage fixant de façon amovible les éléments boîtier (30) et cadre (22) conjointement avec le tissu filtrant (24) maintenu entre les éléments ;
**caractérisé par le fait que**
l'anneau de cadre est monté à ajustement serré sur le boîtier, les moyens de serrage comprenant un élément de serrage femelle (27) sur le cadre (22) et un élément de serrage mâle (32) sur le boîtier (30), l'élément de serrage femelle (27) étant monté à ajustement serré sur l'élément de serrage mâle avec le tissu filtrant (24) situé entre les éléments (27, 32), et l'élément de serrage femelle (27) étant défini par un chemin disposé dans l'anneau de cadre, l'élément mâle (32) étant monté à ajustement serré dans le chemin avec le tissu filtrant (24) entre les éléments (27, 32).

2. Structure filtrante (20) selon la revendication 1, dans laquelle le tissu filtrant (24) est enveloppé autour de l'anneau de cadre.

3. Structure filtrante (20) selon la revendication 1, dans laquelle le tissu filtrant (24) est enveloppé autour de l'intérieur de l'anneau de cadre.

4. Structure filtrante (20) selon la revendication 1, dans laquelle le boîtier (30) a la forme d'un rectangle.

5. Structure filtrante (50) selon la revendication 1, dans laquelle le boîtier (30) a la forme d'un carré.

6. Structure filtrante (60) selon la revendication 1, dans laquelle le boîtier (30) a la forme d'un cercle.

7. Structure filtrante (20) selon la revendication 1, dans laquelle le boîtier (30) a une forme angulaire.

8. Structure filtrante (70) selon la revendication 1, dans laquelle le boîtier (30) a une forme incurvée.
